# EUROPÄISCHE PATENTSCHRIFT

(11) **EP 1 335 180 B1**
(45) Veröffentlichungstag und Bekanntmachung des Hinweises auf die Patenterteilung: **08.11.2017**
(21) Anmeldenummer: 03002223.0
(22) Anmeldetag: 31.01.2003
(51) Int. Cl.: G01B 5/008, G01B 5/00

(54) **Messgerät mit einem Tragkörper**
Measuring device with a support body
Dispositif de mesure avec un corps de support

(30) Priorität: 12.02.2002 DE 10205681
(43) Veröffentlichungstag der Anmeldung: 13.08.2003
(73) Patentinhaber: Carl Zeiss Industrielle Messtechnik GmbH, 73447 Oberkochen (DE)
(72) Erfinder: Jacobs, Klaus, 89551 Königsbronn-Ochsenberg (DE); Piwek, Volker, 28201 Bremen (DE); Woletz, Franz, 73457 Essingen (DE)
(74) Vertreter: Patentanwälte Geyer, Fehners & Partner mbB

(56) Entgegenhaltungen:
- EP-A2- 0 957 332
- DE-A1- 10 020 339
- DE-A1- 19 916 050
- GB-A- 2 154 543

## Beschreibung

Die Erfindung bezieht sich auf ein Meßgerät mit einem Tragkörper, auf dem Führungen für verfahr- und verstellbare Einrichtungen zum Vermessen eines Werkstückes angebracht sind, und mit einem Untergestell, das den Tragkörper abstützt.

Aus der DE-AS 22 48 194 ist ein Meßgerät in Portalbauweise bekannt, bei dem sich das verfahrbare Portal auf am Tragkörper angebrachten Führungen abstützt. Das zu vermessende Werkstück wird auf einer Meßauflage eingespannt und mittels einer an dem Portal in zwei Koordinaten verfahrbar angebrachten Pinole mit einem Taster abgetastet. Da die Meßauflage auf dem Traggestell ruht, wirken sich alle Belastungsveränderungen auf dem Meßtisch (z.B. wegen variierender Massen der zu untersuchenden Werkstücke und Aufspanneinrichtungen) auf den Trägerkörper und damit auch auf die auf diesem angebrachten Führungen aus, indem sie dort zu Deformationen führen können, durch welche die präzise Position der auf ihnen gelagerten und geführten Teile und damit letztlich auch die Meßgenauigkeit des Koordinatenmeßgerätes ungünstig beeinflußt werden.

Bei einem anderen bekannten Koordinatenmeßgerät (DE-AS 17 98 191) wird eine Meßaufnahme eingesetzt, die über in entsprechenden Führungen auf dem Tragkörper geführte und hydraulisch vertikal verstellbare Führungssäulen in ihrer Höhenlage einstellbar ist. Wenn die gewünschte Höhe erreicht ist, wird die Meßauflage durch Arretieren der Säulen gegenüber dem Tragkörper festgelegt. Da in diesem arretierten Zustand wiederum eine feste Verbindung zwischen der Meßauflage und dem Tragkörper geschaffen ist, führen auch hier Belastungsänderungen auf der Meßauflage zu den bereits erwähnten Deformationen in den am Tragkörper befestigten Führungen mit den damit verbundenen Beeinflussungen der Meßgenauigkeit.

Eine andere Einrichtung zum Ankoppeln einer Meßaufnahme an einen Tragkörper eines Meßgerätes wird in der DE-OS 31 18 612 beschrieben. Dort umfaßt der Tragkörper ein aus Längs- und Querrippen zusammengeschweißtes Grundgestell, auf oder in dem Führungen für verfahr- und verstellbare Meßeinrichtungen angebracht sind, wobei in Kreuzungspunkten der Längs- und Querrippen dieses Gestells Hülsen angebracht sind, die in ihrer Höhe justierbare Stützen aufnehmen, welche ihrerseits direkt auf dem Fundament ruhen und auf denen die Meßauflage über zwischengeschaltete Lagerelemente abgestützt ist. Zusätzlich sind Verbindungselemente für eine spiel- und spannungsfreie Verbindung der Meßauflage mit dem Grundgestell in einer definierten Lageorientierung vorgesehen. Der Gesamtaufbau dieses bekannten Gerätes ist sehr kompliziert im Aufbau und erfordert den Einsatz eine Vielzahl von teilweise kompliziert geformten und präzise zu bearbeitender Lager- und Führungselementen, zu deren Montage ein nicht unerheblicher Aufwand erforderlich ist.

Ausgehend hiervon liegt der Erfindung die Aufgabe zugrunde, ein Meßgerät zur Verfügung zu stellen, das bei besonders einfachem Aufbau und unkomplizierter Montage auch bei Auftreten erheblicher Änderungen in den Massen der zu bearbeitenden Werkstücke und der einzusetzenden Aufspannvorrichtungen keine Beeinflussungen des Traggestells sowie der an diesem angebrachten Führungen und damit der Meßgenauigkeit des Meßgerätes bei gleichzeitig wirtschaftlicher Gestaltung hervorruft.

Erfindungsgemäß wird diese Aufgabe gelöst durch ein Meßgerät mit einem Tragkörper, auf dem Führungen für verfahr- und verstellbare Meßeinrichtungen angebracht sind, mit einem Untergestell, das den Tragkörper abstützt und einen aus Rahmenträgern gebildeten Rahmen aufspannt, der eine im wesentlichen rechteckförmige Rahmenöffnung umgrenzt und auf Stützelementen zur Abstützung auf an einem Fundament angebrachten Dämpfern befestigt ist, und mit einer Meßauflage zur Aufnahme eines zu vermessenden Werkstücks, wobei bei zwei einander gegenüberliegenden Rahmenträgern neben diesen innerhalb der Rahmenöffnung jeweils ein Tragbalken angebracht ist, der sich mit jedem seiner Enden auf einer auf der Rahmenunterseite in den von der Rahmenöffnung aufgespannten Flächenbereich vorragenden Oberfläche eines Stützelementes über eine Gelenkstelle abstützt, wobei sich die Meßauflage seitlich auf jedem der beiden Tragbalken abstützt.

Dadurch können die von der Meßauflage herrührenden Kräfte über Stützelemente in jeden der beiden Tragbalken eingeleitet werden.

Vorzugsweise ist dabei an jeder Rahmenecke ein Stützelement vorgesehen, wobei die Stützelemente, erneut bevorzugt, aus quaderförmigen Stahlplatten gebildet sind. Ganz besonders bevorzugt ist ein erfindungsgemäße Meßgerät als Koordinatenmeßgerät ausgebildet.

Durch die Maßnahmen nach der Erfindung wird sichergestellt, daß sich die Meßauflage, die zum Abstützen der zu vermessenden Werkstücke und der hierfür eingesetzten Aufspanneinrichtungen dient, sich über die beiden seitlich des Untergestells liegenden, mit dem Untergestell jedoch nicht verbundenen Tragbalken direkt und ohne Zwischenschaltung des Traggestells über die Stützelemente, die gleichzeitig auch als Stützelemente für das Untergestell und damit für den Tragkörper dienen, auf dem Fundament abstützen kann. Dies geschieht erfindungsgemäß dadurch, daß die auf der Unterseite des Untergestells angebrachten und mit diesem verbundenen Stützelemente in ihrer Größe so ausgelegt sind, daß sie nicht nur unterhalb der Rahmenträger liegen, sondern ihre Oberfläche auch noch unterhalb des Rahmens in den von der darüberliegenden Rahmenöffnung aufgespannten Flächenbereich vorragen. Die dorthin vorstehende Oberfläche der Stützelemente wird nun dazu eingesetzt, daß die beiden erfindungsgemäß vorgesehenen Tragbalken, deren jeder innerhalb der Rahmenöffnung seitlich direkt einer von zwei einander gegenüberliegenden Rahmenseiten benachbart neben dem jeweils diese Rahmenseite ausbildenden Rahmenträger liegt, mit ihren Enden sich jeweils über eine Gelenkstelle auf einer solchen vorstehenden Oberfläche eines Stützelementes direkt abstützen können. Dadurch, daß die Tragbalken direkt seitlich neben den Rahmenträgern liegen, kann erreicht werden, daß der in den Flächenbereich der Rahmenöffnung vorspringende Abschnitt der Oberfläche jedes Stützelementes voll zur Abstützung des jeweils vorhandenen Tragbalkens genutzt werden kann und insoweit eine Minimierung der vorstehenden Oberflächengröße jedes Stützelementes gewährleistet ist. Gleichzeitig wird durch die Nebeneinanderordnung von zwei einander gegenüberliegenden Rahmenträgern und den zugeordneten zwei Tragbalken auch eine definierte Lage der Meßauflage relativ zum Tragkörper erreicht, ohne daß es hierfür weiterer zusätzlicher Maßnahmen bedürfte. Die aus den beiden Tragbalken, der Meßauflage, den Gelenkstellen und der die Meßauflage mit den Tragbalken verbindenden Stützkörpern gebildete Anordnung ist vollständig von dem Untergestell, das den Tragkörper abstützt, und damit auch vom Tragkörper selbst entkoppelt, so daß unterschiedliche Belastungszustände auf der Meßauflage nicht mehr in das Untergestell eingeleitet, sondern ohne dessen Zwischenschaltung direkt über die Tragbalken und die Stützelemente auf dem Fundament abgestützt werden können. Dies beinhaltet aber nicht nur eine kräftemäßige, sondern auch eine schwingungsmäßige Entkopplung zwischen Meßaufnahme und Untergestell bzw. dem von diesem abgestützten Tragkörper mit den Führungen für die Meßeinrichtungen, wobei die Gesamtgestaltung auch noch zu montage- und servicefreundlichen Fügestellen führt. Durch eine geeignete Auslegung der Tragbalken kann auch sichergestellt werden, daß Belastungsänderungen auf der Meßaufnahme infolge Änderungen der Massen der aufzuspannenden Werkstücke und der eingesetzten Aufspannvorrichtungen zu einem rein elastischen Verformungsverhalten der Tragbalken führen und eine Verformung des gesamten Gestells vermieden wird. Da es zu keiner merklichen Kräfteübertragung zwischen der Meßauflage und dem Untergestell bzw. dem Tragkörper kommt, bleibt die Präzision der Ausrichtung der auf letzterem angebrachten Führungen für die verschiedenen Meßeinrichtungen ebenso wie die Präzision der durchgeführten Messungen unbeeinflußt und voll erhalten. Insbesondere erfährt das Untergestell des Rahmens an seinen Längsseiten auch keine Biegeverformung.

Die auftretenden Kräfte werden direkt über die Gelenkstellen und die Stützelemente, die gegenüber dem Fundament als Dämpfungskörper dienen, auf diesem abgestützt.

Bevorzugt wird bei der Erfindung jeder Tragbalken so ausgebildet, daß er eine im wesentlichen der ihm zugeordneten Innenseite der Rahmenöffnung entsprechende Länge aufweist. Damit wird es möglich, die Stützelemente direkt in den Vierecken des Rahmens des Untergestells anbringen zu können, wodurch statisch eine optimale Abstützung des Untergestells erfolgen kann. Auch können die Tragbalken gemäß den Prinzipien von Bauteilen gleicher Biegebeanspruchung gestaltet werden, unabhängig von der Rahmengestaltung.

Die formmäßige Ausgestaltung der Tragbalken kann in jeder geeigneten Art und Weise vorgesehen werden, wobei eine ganz besonders bevorzugte Formgebung darin besteht, daß jeder Tragbalken - im Schnitt über seine Länge gesehen - einen trapezförmigen Querschnitt aufweist. Damit wird hinsichtlich der bei der Lastübertragung im Querschnitt des Tragbalkens auftretenden Spannungen eine Optimierung erzielt, die gleichzeitig auch eine Optimierung im Hinblick auf die einzusetzende Materialmenge darstellt. Es kann jedoch in bestimmten Einsatzfällen auch vorteilhaft sein, wenn der Tragbalken über seine gesamte Länge hinweg eine konstante Höhe bzw. einen konstanten Querschnitt aufweist. Vorteilhafterweise werden die Tragbalken so ausgebildet, daß jeder Tragbalken eine Höhe oder, falls er über seine Länge hinweg eine unterschiedliche Höhe hat, eine maximale Höhe derart aufweist, daß diese der Höhe des neben ihm liegenden Rahmenträgers entspricht, wodurch die Oberseite des Tragbalkens und die Oberseite der Rahmenträger in einer Ebene angeordnet sind.

Eine vorteilhafte Ausgestaltung der Erfindung besteht auch darin, daß jeder Tragbalken auf seiner Oberseite mit mindestens zwei, vorzugsweise aber drei oder vier, Stützkörpern verbunden ist. Diese Stützkörper sind im Tragbalken verankert und ragen von ihm aus nach oben zum Abstützen der Meßauflage bzw. zum Übertragen und Einleiten der von dieser kommenden Kräfte in den Tragbalken. Besonders bevorzugt sind dabei die Stützkörper auf jedem Tragbalken in einer Reihe parallel zur benachbarten Rahmenseite angeordnet. Damit kann über die Länge des Tragbalkens hinweg, über welche die Stützkörper angeordnet sind, die Einleitung der Kräfte durch jeden der Stützkörper in den Tragbalken an einer relativ zu den anderen Stützkörpern bezüglich der Breite des Stützkörpers gleichen Position in diesen eingeleitet werden, was zu einer günstigen Spannungsbeanspruchung im Querschnitt des Stützkörpers über dessen Länge hinweg führt.

Die Ausbildung der Stützkörper in Form und Material kann in jeder geeigneten Art und Weise erfolgen. Bevorzugt bestehen jedoch die Stützkörper aus Zylindern aus Metall, besonders bevorzugt aus Stahlzylindern, oder aus quaderförmigen Stahlplatten.

Auch das Untergestell kann bei dem erfindungsgemäßen Meßgerät in jeder geeigneten Weise ausgebildet sein, wobei es besonders bevorzugt aus einem Metallrahmen besteht, vorteilhafterweise aus einem Stahlrahmen.

Eine weitere bevorzugte Ausgestaltung der Erfindung besteht auch darin, daß der Tragkörper aus Mineralguß gefertigt und das Untergestell in ihn eingegossen ist. Dabei können vorteilhafterweise auch vom Untergestell nach oben ragende Stützen vorgesehen sein, die, erneut bevorzugt, auch in im Tragkörper angeordneten Rohren verlaufen und z.B. an ihrem oberen Ende zur Aufnahme der Führungen für die Meßeinrichtungen dienen können.

Gleichermaßen bevorzugt können die Stützkörper beider Tragbalken auch in eine Mineralgußplatte eingegossen sein, die vorteilhafterweise aus Beton, insbesondere aus Polymerbeton, hergestellt ist. Die Verwendung von Mineralguß hat den Vorteil, daß dieser gute thermisch-isolierende Eigenschaften aufweist und in einer solchen Mineralgußplatte, welche die Meßaufnahme darstellen kann, ohne Schwierigkeiten z.B. Leerrohre für die Durchleitung von elektrischen Leitungen o.ä. verlegt werden können. Besonders bemerkenswert sind jedoch die elastischen und schwingungsdämpfenden Eigenschaften von Polymerbeton, welche einen ganz vorzüglichen Beitrag zum Erhalt der Meßgenauigkeit und auch auf die eingesetzten Meßgeschwindigkeiten der Meßeinrichtungen ausüben.

Die Gelenkstellen können bei dem erfindungsgemäßen Meßgerät in jeder geeigneten Art und Weise ausgebildet sein, die eine entsprechende gelenkige Bewegung unter gleichzeitiger Übertragung von Kräften zwischen dem betreffendem Tragbalken und dem zugehörigen Stützkörper ermöglichen. Besonders bevorzugt kann jede Gelenkstelle jedoch durch einen oder mehrere nebeneinander angebrachte, zwischen dem betreffenden Endbereich des Tragbalkens und der ihn abstützenden Oberfläche des Stützelementes angebrachten Wälzkörper gebildet werden. Vorzugsweise werden die Wälzkörper dabei als zylindrische oder kugelförmige Stahlkörper ausgebildet. Diese Ausgestaltung des erfindungsgemäßen Meßgerätes führt zu einer vorzüglich wirksamen und doch relativ einfach aufgebauten und auch leicht montierbaren Anordnung, die kostengünstig ist.

In einer anderen vorzugsweisen Ausgestaltung der Erfindung werden die Gelenkstellen jeweils durch eine auf der Oberfläche des betreffenden Stützelementes ausgebildete konvexe Erhöhung gebildet, über die sich der Endbereich des betreffenden Tragbalkens auf dem Stützelement abstützt. Hierdurch wird zwar eine etwas kompliziertere Formgebung für das Stützelement erforderlich, die Montage ist jedoch besonders einfach und die Gesamtanordnung ist sehr wirksam.

Eine weitere, vorteilhafte Ausgestaltung des erfindungsgemäßen Meßgerätes besteht auch darin, daß jede Gelenkstelle durch eine elastische Verbindungsschicht gebildet wird, über die der Endbereich des betreffenden Tragbalkens am Stützelement befestigt ist. Als eine solche elastische Verbindungsschicht kann ein geeigneter elastischer Kleber eingesetzt werden. Wird die entsprechende Verbindungsschicht mit der richtigen Dicke ausgeführt, kann sie die auftretenden Gelenk-Relativbewegungen zwischen dem Tragbalken und dem Stützelement hervorragend aufnehmen und dennoch gleichzeitig eine ausreichende Verbindung zwischen beiden Elementen darstellen.

Eine weitere, ebenfalls vorzugsweise Ausgestaltung der bei dem erfindungsgemäßen Meßgerät einzusetzenden Gelenkstellen besteht auch darin, daß diese eine am Stützelement oder am Endbereich des Tragbalkens angebrachte Schwenkachse umfassen, an der das jeweils andere der beiden Teile, um diese verschwenkbar, angelenkt ist.

Das erfindungsgemäße Meßgerät kann zudem auch vorteilhafterweise noch dahingehend ausgestaltet werden, daß die Gelenkstellen durch eine örtliche Querschnittsverminderung am Endbereich des Tragbalkens gebildet werden, etwa in dem Sinne, wie sie (bei dünneren Teilen) als sogenannte *"Filmscharniere"* Anwendung finden. Bevorzugt wird dabei die Querschnittsverminderung in Form einer Nut ausgebildet. Dies reicht aus, um die auftretenden, insgesamt ja nur sehr kleinen Gelenkbewegungen dennoch ausreichend gut aufzunehmen.

Eine nochmals andere und ebenfalls vorteilhafte Ausgestaltung des erfindungsgemäßen Meßgerätes besteht auch darin, daß der Tragbalken über ein Verbindungselement am Stützelement befestigt wird, wobei an diesem Verbindungselement die Gelenkstelle ausgebildet ist, die wiederum besonders bevorzugt durch eine Querschnittsverminderung, etwa in Form einer Kerbnut, an diesem vorliegt.

Durch die erfindungsgemäßen Maßnahmen wird ein Meßgerät mit einem unkomplizierten Aufbau vorgeschlagen, das einfach und wirtschaftlich herstellbar ist, eine vorzügliche Abkopplung des Tragkörpers von den Kräften, die auf die Meßaufnahme wirken, und auch eine schwingungsmäßige Entkopplung zwischen Tragkörper und Meßaufnahme sicherstellt, bei dem montage- und servicefreundliche Fügestellungen vorliegen und sich auch die Montage- und die Servicearbeiten vergleichsweise rasch und unkompliziert durchführen lassen.

Besonders bevorzugt wird das erfindungsgemäße Meßgerät als ein Koordinatenmeßgerät ausgebildet.

Die Erfindung wird nachfolgend anhand der Figuren im einzelnen beispielshalber noch näher erläutert. Es zeigen:
- Fig. 1: eine perspektivische Schrägansicht eines Grundgestells mit Tragbalken, Stützkörpern und an vier Ecken des Grundgestells vorgesehenen Stützelementen zur Abstützung auf einem Fundament für ein erfindungsgemäßes Meßgerät;
- Fig. 2: eine Draufsicht auf die Anordnung aus Fig. 1 (mit auf der einen Rahmenseite weggelassenem Tragbalken);
- Fig. 3: einen Detailschnitt längs Ebene A-A aus Fig. 2;
- Fig. 4: eine perspektivische Seitenansicht eines erfindungsgemäßen Koordinatenmeßgerätes, und die Fig. 5 bis 10 verschiedene vergrößerte Detail-Schnittdarstellungen, die unterschiedliche Ausbildungen von Gelenkstellen zeigen.

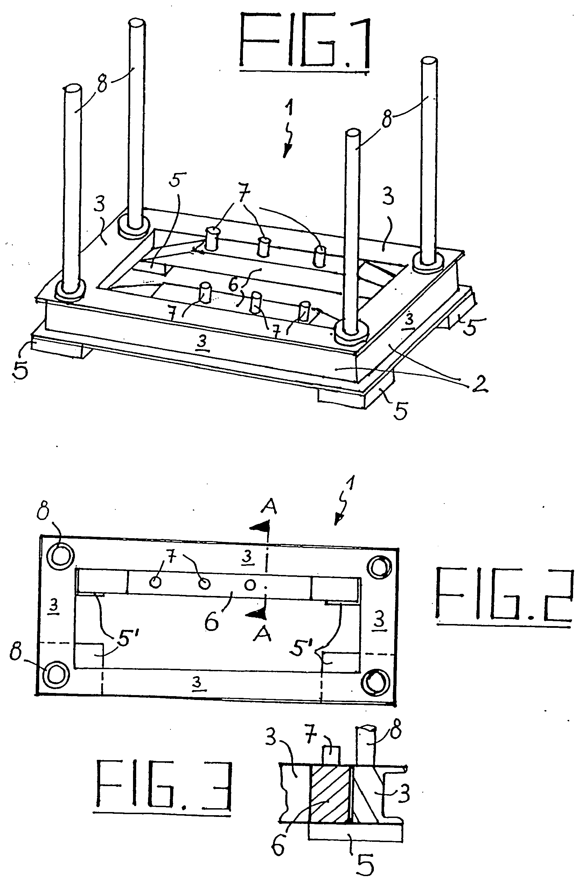

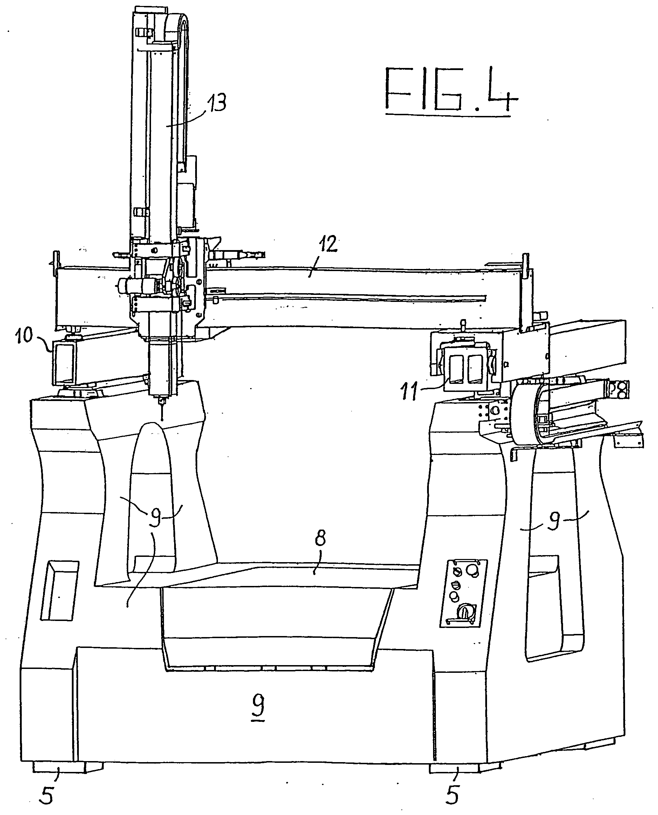

In Fig. 1 ist in schräger Perspektivansicht (von rechts oben) und in Fig. 2 in Draufsicht eine Prinzipdarstellung eines Untergestells 1 für ein Meßgerät, z.B. für ein Koordinatenmeßgerät in Brückenbauweise, wie ein solches in Fig. 4 in perspektivischer Schrägdarstellung gezeigt ist, dargestellt.

Das Untergestell 1 ist aus einem Rahmen 2 gebildet, der aus vier Stahlrahmenträgern 3 besteht und eine rechteckige Rahmenöffnung 4 umschließt.

An den vier Ecken des Rahmens 2 sind an diesem auf der Rahmenunterseite z.B. aus Stahl gebildete Stützelemente 5 befestigt, mit denen der Rahmen 2 auf einem (in den Figuren nicht dargestellten) Fundament gedämpft abgestützt wird. Diese Stützelemente 5 werden häufig auch als "Dämpfer-Pads" bezeichnet und können ohne weiteres auch aus einem anderen geeigneten Material gebildet sein oder eine andere Form, etwa als kreisrunde Platten, aufweisen.

An den einander gegenüberliegenden Längsseiten des Rahmens 2, ist jeweils ein Tragbalken 6 angebracht, der direkt neben dem jeweiligen Rahmenträger 3 liegt, mit diesem aber nicht verbunden ist. In der Draufsicht der Fig. 2 ist nur der in der Figur oben liegende Tragbalken 6 eingezeichnet, während der andere Tragbalken auf der gegenüberliegenden (in Fig. 2: auf der unten liegenden) Seite zur besseren Darstellung weggelassen ist.

Wie insbesondere aus Fig. 2 (untere Hälfte) gut ersichtlich ist, ragen die im Bereich der Rahmenecken angebrachten Stützelemente 5 mit ihrer Oberseite auch noch in den Flächenbereich hinein, den die Rahmenöffnung 4 ausbildet, allerdings unterhalb des Rahmens 2. Diese in die Rahmenöffnung 4 hineinragenden Oberflächenbereiche der Stützelemente 5 sind in Fig. 2 mit dem Bezugszeichen 5' versehen.

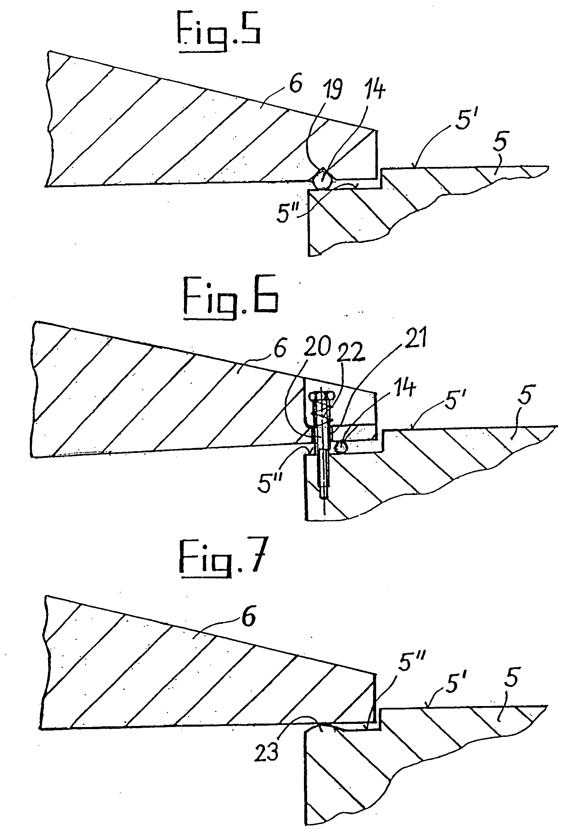

Wie nun aus den Fig. 1 und 2 entnommen werden kann, stützen sich die beiden Tragbalken 6 neben den Rahmenträgern 3 an den Längsseiten des Rahmens 2 mit ihren beiden Endbereichen jeweils auf der Oberseite eines solchen in die Rahmenöffnung 4 hineinstehenden Oberflächenbereiches 5' eines Stützelementes 5 ab, so daß jeder Tragbalken 6 den Bereich zwischen den beiden Stützelementen 5, auf denen er sich abstützt, nach Art einer Brücke überdeckt. Dabei entspricht die Gesamtlänge jedes Tragbalkens 6 im wesentlichen der Länge der entsprechenden Seite der Rahmenöffnung 4. Dabei erfolgt die Abstützung jeweils über eine Gelenkstelle, die eine gewisse gelenkige Verschwenkung zwischen dem Tragbalken 6 und dem Stützelement 5 zuläßt. Beispiele für solche Gelenkstellen sind in den Fig. 5 bis 10 dargestellt, auf die noch weiter unter einzugehen sein wird.

Wie Fig. 1 zeigt, weist bei der gezeigten Ausführungsform jeder Tragkörper 6 im Längsschnitt gesehen eine Trapezform auf, wobei seine Höhe gerade in den Endbereichen, in denen er sich auf den Oberflächenbereichen 5' jedes der beiden zugeordneten Stützelementen 5 abstützt, zum jeweiligen Ende hin kontinuierlich abnimmt.

Aus der Schnittdarstellung in Fig. 3, die einen Detailschnitt längs der Schnittebene A-A aus Fig. 2 zeigt, ist erkennbar, daß jeder Tragbalken 6 in seinem mittleren Bereich eine Höhe aufweist, die der Höhe des daneben liegenden Längsbalkens 3 entspricht, so daß die oben liegenden Flächen jedes Stützbalkens 6 und des daneben verlaufenden Rahmenträgers 3 im wesentlichen in einer Ebene liegen.

Jeder Stützbalken 6 ist auf seiner Oberseite mit einer Reihe von (im dargestellten Fall: drei) in ihm verankerten, nach oben ragenden Stützkörpern 7 versehen, die im gezeigten Ausführungsbeispiel als Stahlzylinder ausgebildet sind. Diese Stützkörper 7 sind in einer Reihe mittig auf der oberen Fläche des Tragbalkens 6 und damit parallel zu dem anliegenden Rahmenträger 3 angeordnet, wobei sie im gezeigten Ausführungsbeispiel in gleichen Abständen voneinander entfernt angebracht sind. Selbstverständlich können die Stützkörper 7 auch aus jedem anderen geeigneten Material und in jeder anderen gewünschten Form ausgebildet sein und auch in anderer Anordnung sowie anderer Anzahl am betreffenden Tragbalken 6 angebracht sein.

Die Darstellung der Fig. 1, 2 und 3 stellt nur prinzipiell das Vorhandensein und die Anordnung solcher Stützkörper 7 dar, ohne daß aus dieser Darstellung ein Rückschluß auf die genaue Form, Größe und Länge des einzelnen Stützkörpers gezogen werden kann. Diese werden vielmehr in den angegebenen Parametern so ausgelegt, wie es im Hinblick auf das Meßgerät, bei dem die ganze Anordnung eingesetzt werden soll, für den Fachmann zweckmäßig ist. Die Verankerung eines Stützkörpers 7 am zugehörigen Tragbalken 6 kann ebenfalls in jeder geeigneten Weise erfolgen: er kann eingeschraubt werden, was ggf. ein späteres problemfreies Auswechseln oder Austauschen gegen einen anderen Stützkörper ermöglicht; gleichermaßen könnte er aber auch angeschweißt oder durch einen Schrumpfsitz oder sonstwie an zugehörigen Tragbalken 6 verankert werden.

Wie die Fig. 1 und 2 zeigen, sind in den vier Eckbereichen des Rahmens 2 nach oben ragende Stangen 8 vorgesehen, die innerhalb des Tragkörpers 9 verlaufen (vgl. Fig. 4) und an deren Oberseite Führungen 10, 11 für verfahrbare Meßeinrichtungen des Meßgerätes befestigt sind (vgl. Fig. 4).

Diese Stützen 8 sind bei dem Koordinatenmeßgerät, wie es in Fig. 4 gezeigt ist, in einen Tragkörper 9 aus Polymerbeton eingegossen, wobei in diesen auch noch das Untergestell 2 mit eingegossen ist.

Über die Stützkörper 7 stützen die Tragbalken 6 das Gewicht einer Meßauflage 8 (Fig. 4) des Meßgerätes ab, auf der (in Fig. 4 nicht dargestellt) das zu vermessende Werkstück und die dieses halternden Aufspanneinrichtungen angebracht sind.

Infolge der konstruktiven Anordnung zwischen Tragbalken 6 und Untergestell 1, wie sie in den Fig. 1 bis 3 gezeigt ist, besteht keine Verbindung zwischen den Tragbalken 6 und dem Untergestell 2, sondern die von den Tragbalken 6 unter Zwischenschaltung der Gelenkstellen über die Stützkörper 7 aufgenommenen, von der Meßauflage 8 ausgehenden Belastungen werden über die Tragbalken 6 und die Gelenkstellen direkt auf die Oberflächenbereiche 5' der in die Rahmenöffnung 4 hineinragenden Flächenabschnitte der Stützkörper 5 weiter- und in letztere eingeleitet. Selbst wenn große Massenänderungen auf der Meßauflage 8 und damit starke Änderungen in den weiterzuleitenden Belastungen auftreten, können unter der Einwirkung dieser Kräfte zwar die mittleren Bereiche der brückenförmig wirksamen Tragkörper 6 innerhalb der Aufnahmeöffnung 4 des Rahmens 2 nach unten hin etwas ausfedern (wobei die Bemessung der Tragbalken 6 so vorgenommen ist, daß die Ausfederung stets im elastischen Bereich bleibt), es findet aber keine kräftemäßige Beeinflussung des Rahmens 2 und über diesen des Tragkörpers 5 und der Führungen 10, 11 statt, da insbesondere auch die Gelenkstellen das Einleiten von Biegemomenten aus den Tragbalken 6 in die Stützelemente 5 verhindern.

Deshalb kann die die Meßauflage 8 bei dem in Fig. 4 gezeigten Koordinatenmeßgerät überspannende Meßbrücke 12 mit einer längs ihr verfahrbaren Pinole 13, die ihrerseits höhenverstellbar ist, zur Vermessung eines auf der Meßauflage 8 aufgespannten Werkstücks längs der Führungen 10 und 11 verfahren werden, ohne daß bei den Führungen 10, 11 durch das Gewicht der Meßauflage 8 mit dem aufgespanntem Werkstück und den Aufspannvorrichtungen irgendwelche Kräfte auf das Traggestell 9 ausgeübt würden, welche eine Abweichung von der genauen Ausrichtung und Lage der Führungen 10, 11 bewirken könnten.

Auch bei starker Belastung auf der Meßauflage 8 erfährt der Rahmen 2 des Untergestells 1 an seinen Längsseiten keinerlei Biegeverformungen. Gleichermaßen werden auch eventuell an der Meßauflage 8 auftretende Schwingungen nicht auf den Rahmen 2, das Untergestell 1 und damit auf den Tragkörper 5 und die Führungen 10, 11 übertragen, da eine schwingungsmäßige Entkopplung gleichfalls erreicht ist.

Die bereits erwähnten Gelenkstellen zwischen den Tragbalken 6 und den Stützelementen 5 können in jeder dem Fachmann bekannten und geeigneten Weise ausgeführt sein. Einige Beispiele zur (prinzipiellen) Darstellung der Ausbildung solcher Gelenkstellen sind in den Fig. 5 bis 10 (in vergrößerter Detailschnitt-Darstellung) illustriert:
In Fig. 5 ist das eine Ende eines Tragbalkens 6 gezeigt sowie das ihm zugewandte Ende eines Stützelementes 5. An dem Stützelement 5 ist auf dessen Oberseite in dem Oberflächenbereich 5' an dessen den Tragbalken 6 zugewandten Endbereich eine vertiefte Aufnahmefläche 5" vorgesehen, auf der sich der Tragbalken 6 mit seinem Ende unter Zwischenschaltung eines Wälzkörpers 14 abstützt. Der Wälzkörper 14, der in Form von Kugeln oder, besonders bevorzugt, als ein Metallzylinder ausgebildet sein kann, ragt auf der Unterseite des Tragbalkens 6 in eine Kerbnut 19 hinein, die ein unerwünschtes Relativschieben des Wälzkörpers 14 zum Tragbalken 6 verhindert und ihn in diesem haltert.

Eine ähnliche Ausbildung der Gelenkstelle ist in Fig. 6 gezeigt:
Auch dort stützt sich das Ende des Tragbalkens 6 über einen solchen Wälzkörper 14 auf der abgesenkten Aufnahmefläche 5" des Stützelementes 5 ab. Im Gegensatz zu der Ausbildung nach Fig. 5 ist hier jedoch der Wälzkörper 14 nicht in einer auf der Unterseite des Tragbalkens 6 angebrachten Aufnahmenut gehaltert. Statt dessen ist hier eine in den Endbereich des Stützelementes 5 eingeschraubte und über die Aufnahmefläche 5" nach oben hin vorstehende Schraube 20 (oder mehrere Schrauben) vorgesehen, die durch eine Öffnung 21 im Endbereich des Tragbalkens 6 unter Spiel hindurchragt, wobei eine Feder 22 zwischen dem Kopf der Schraube 20 und der Oberseite des Tragbalkens 6 zwischengeschaltet ist und eine Vorspannung zwischen dem Kopf der Schraube 20 und der Oberseite des Tragbalkens 6 bewirkt. Wenn sich das Ende des Tragbalkens 6 etwas um den Wälzkörper 14 herum relativ zum Stützelement 5 verschwenkt, kann diese Verschwenkung durch das Spiel der Schraube 20 in der Öffnung 21 ausgeglichen werden, und durch die Vorspannung der Feder 22 wird aber gleichzeitig auch noch ein Halteschluß zwischen dieser Schraube 20 und dem Tragbalken 6 gewährleistet.

Bei der in Fig. 7 gegebenen Ausbildungsform für eine Gelenkstelle stützt sich der Endbereich des Tragbalkens 6 auf einer über die Aufnahmefläche 5" nach oben hin konvex ausgebildete Vorwölbung 23 ab, auf der er bei Ausführung einer Verschwenkbewegung relativ zum Stützelement 5 gelenkig abrollen kann.

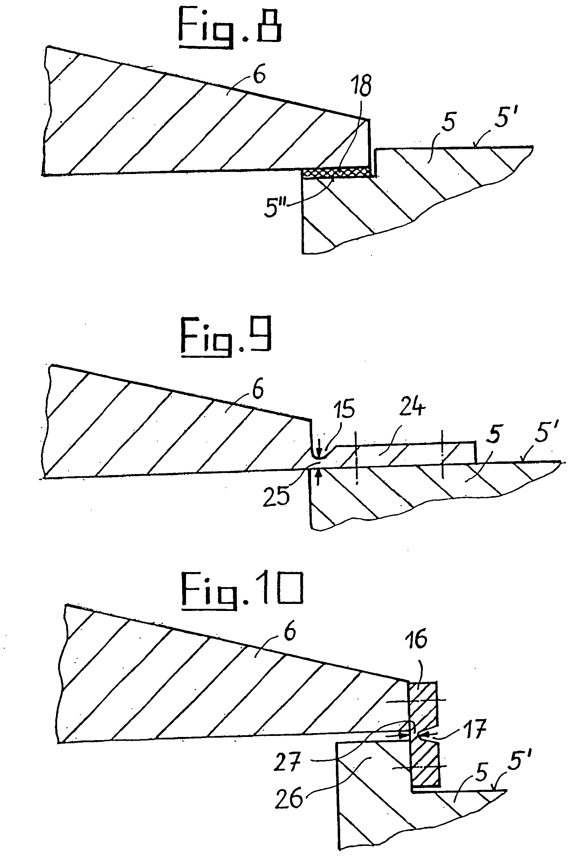

Bei der in Fig. 8 gezeigten Ausgestaltung für eine Gelenkstelle ist der Endbereich des Tragbalkens 6 unter Zwischenschaltung einer elastischen Schicht 18 auf der Aufnahmefläche 5" des Stützelementes 5 befestigt und stützt sich über diese elastische Zwischenschicht 18 auf dem Stützelement 5 ab. Verschwenkt der Tragbalken 6 relativ zum Stützelement 5, dann kann diese Verschwenkbewegung durch die Elastizität der Zwischenschicht 18 aufgenommen werden, ohne daß die Verbindung zwischen Tragbalken 6 und Stützelement 5 aufgehoben wird. Die Dicke der Zwischenschicht 18 ist lediglich so groß zu wählen, daß unter Berücksichtigung der elastischen Eigenschaften dieser Zwischenschicht 18 auftretende Verschwenkbewegungen von ihr vollständig aufgenommen werden können, ohne daß sie aufreißt.

In den Fig. 9 und 10 sind zwei weitere Ausführungsformen zur Ausbildung einer Gelenkstelle gezeigt, die beide im Prinzip mit einer Querschnittsverringerung eines Verbindungselementes arbeiten, das im Sinne eines *"Filmscharnieres"* eine relative Verschwenkbewegung zwischen Tragbalken 6 und Stützelement 5 gestattet.

So ist bei der Ausbildung nach Fig. 9 der Endbereich des Tragbalkens 6 in Form eines plattenförmigen Endflansches 24 ausgebildet, wobei die Gelenkstelle durch eine Querschnittsverringerung in Form einer Nut 15 zum anschließenden Endbereich des Tragbalkens 6 gebildet wird. Diese Nut 15 ist so tief ausgeführt, daß der verbleibende Materialquerschnitt 25 ausreichend klein ist, um die auftretenden relativen Verschwenkbewegungen zwischen Tragbalken 6 und dem plattenförmigen Endbereich 24 zu gestatten.

Bei der Ausführungsform nach Fig. 10 ist die Endfläche des Tragbalkens 6 senkrecht zu dessen Unterseite ausgerichtet und an ihr sowie einem am Ende des Stützelementes 5 senkrecht zu dessen Oberfläche 5' nach oben geführten Absatz 26 ein Verbindungselement 16 befestigt (jeweils unter Zwischenschaltung einer nicht dargestellten Schraubverbindung), das im Bereich zwischen dem Tragbalken 6 und dem Absatz 26 auf seiner dem Tragbalken 6 abgewandten Seite wiederum durch eine Nutvertiefung 17 eine geeignete Querschnittsverringerung erhält, die über den verbleibenden Restquerschnitt 27 die Aufnahme einer Verschwenkbewegung zwischen Tragbalken 6 und Stützelement 5 gestattet.

Es sind durchaus auch weitere Ausbildungsmöglichkeiten für die Ausbildung der Gelenkstelle denkbar, so etwa ein Anschweißen des Endes des Tragbalkens 6 auf dem Stützelement 5 mittels einer elastischen Schweißnaht o.ä..

## Patentansprüche

1. Meßgerät mit einem Tragkörper (9), auf dem Führungen (10,11) für verfahr- und verstellbare Meßeinrichtungen (12,13) angebracht sind, mit einem Untergestell (1), das den Tragkörper (9) abstützt und einen aus Rahmenträgern (3) gebildeten Rahmen (2) aufspannt, der eine im wesentlichen rechteckförmige Rahmenöffnung (4) umgrenzt und auf Stützelementen (5) zur Abstützung auf einem Fundament befestigt ist, und mit einer Meßauflage (8) zur Aufnahme eines zu vermessenden Werkstücks, ***dadurch gekennzeichnet,* daß** bei zwei einander gegenüberliegenden Rahmenträgern (3) neben diesen innerhalb der Rahmenöffnung (4) jeweils ein Tragbalken (6) angebracht ist, der sich mit jedem seiner Enden auf einer auf der Rahmenunterseite in den von der Rahmenöffnung (4) aufgespannten Flächenbereich vorragenden Oberfläche (5') eines Stützelementes (5) über eine Gelenkstelle abstützt, wobei sich die Meßauflage (8) seitlich auf jedem der beiden Tragbalken (6) abstützt.

2. Meßgerät nach Anspruch 1, **dadurch gekennzeichnet, daß** an jeder Rahmenecke ein Stützelement (5) vorgesehen ist.

3. Meßgerät nach Anspruch 1 oder Anspruch 2, **dadurch gekennzeichnet, daß** jeder Tragbalken (6) eine im wesentlichen der ihm zugeordneten Innenseite der Rahmenöffnung (4) entsprechende Länge aufweist.

4. Meßgerät nach einem der Ansprüche 1 bis 3, **dadurch gekennzeichnet, daß** jeder Tragbalken (6) - im Längsschnitt gesehen - einen trapezförmigen Querschnitt aufweist.

5. Meßgerät nach einem der Ansprüche 1 bis 4, **dadurch gekennzeichnet, daß** jeder Tragbalken (6) eine Höhe aufweist, die der Höhe des neben ihm liegenden Rahmenträgers (3) entspricht.

6. Meßgerät nach einem der Ansprüche 1 bis 5, **dadurch gekennzeichnet, daß** jeder Tragbalken (6) auf seiner Oberseite mindestens zwei Stützkörper (7) aufweist.

7. Meßgerät nach einem der Ansprüche 1 bis 6, **dadurch gekennzeichnet, daß** die Stützelemente (5) von quaderförmigen Stahlplatten gebildet werden.

8. Meßgerät nach einem der Ansprüche 1 bis 7, **dadurch gekennzeichnet, daß** das Untergestell (1) aus einem Stahlrahmen (2) besteht.

9. Meßgerät nach einem der Ansprüche 1 bis 8, **dadurch gekennzeichnet, daß** der Tragkörper (9) aus Mineralguß gefertigt und das Untergestell (1) in ihn eingegossen ist.

10. Meßgerät nach einem der Ansprüche 6 bis 9 **dadurch gekennzeichnet, daß** die Stützkörper (7) beider Tragbalken (6) in eine Mineralgußplatte eingegossen sind.

11. Meßgerät nach Anspruch 9 oder Anspruch 10, **dadurch gekennzeichnet, daß** der Mineralguß Polymerbeton ist.

12. Meßgerät nach einem der Ansprüche 1 bis 11, **dadurch gekennzeichnet, daß** es ein Koordinatenmeßgerät ist.

13. Meßgerät nach einem der Ansprüche 1 bis 12, **dadurch gekennzeichnet, daß** jede Gelenkstelle durch einen oder mehrere nebeneinander angebrachte, zwischen dem betreffenden Endbereich des Tragbalkens (6) und der ihn abstützenden Oberfläche (5') des Stützelementes (5) angebrachten Wälzkörper gebildet (14) wird.

14. Meßgerät nach Anspruch 13, **dadurch gekennzeichnet, daß** die Wälzkörper (14) zylindrische oder kugelförmige Stahlkörper sind.

15. Meßgerät nach einem der Ansprüche 1 bis 12, **dadurch gekennzeichnet, daß** die Gelenkstelle durch eine auf der Oberfläche des betreffenden Stützelementes (5) ausgebildete konvexe Erhöhung gebildet wird, über die sich der Endbereich des betreffenden Tragbalkens (6) auf dem Stützelement (5) abstützt.

16. Meßgerät nach einem der Ansprüche 1 bis 12, **dadurch gekennzeichnet, daß** die Gelenkstelle durch eine elastische Verbindungsschicht (18) gebildet wird, über die der Endbereich des betreffenden Tragbalkens (6) am Stützelement (5) befestigt ist.

17. Meßgerät nach einem der Ansprüche 1 bis 12, **dadurch gekennzeichnet, daß** die Gelenkstelle eine am Stützelement (5) oder am Endbereich des Tragbalkens (6) angebrachte Schwenkachse umfaßt, an der das jeweils andere beider Teile verschwenkbar angelenkt ist.

18. Meßgerät nach einem der Ansprüche 1 bis 12, **dadurch gekennzeichnet, daß** die Gelenkstelle durch eine örtliche Querschnittsverminderung (15) am Endbereich des Tragbalkens (6) gebildet wird.

19. Meßgerät nach Anspruch 18, **dadurch gekennzeichnet, daß** die Querschnittsverminderung (15) in Form einer Nut ausgebildet ist.

20. Meßgerät nach einem der Ansprüche 1 bis 12, **dadurch gekennzeichnet, daß** der Tragbalken (6) über ein Verbindungselement (16) am Stützelement (5) befestigt ist, wobei das Verbindungselement (16) seinerseits eine Gelenkstelle (17) ausbildet.

21. Meßgerät nach Anspruch 20, **dadurch gekennzeichnet, daß** die Gelenkstelle (17) durch eine Querschnittsverminderung (15) am Verbindungselement (16) gebildet wird.

## Claims

1. Measuring system having a carrying body (9), on which are fitted guides (10, 11) for displaceable and adjustable measuring devices (12, 13), having a substructure (1), which supports the carrying body (9) and defines a frame (2) which is formed from frame carriers (3), surrounds an essentially rectangular frame opening (4) and is fastened on supporting elements (5) for providing support on a foundation, and having a measuring panel (8) for accommodating a workpiece which is to be measured, **characterized in that**, with two frame carriers (3) being located opposite one another, a respective carrying beam (6) is fitted alongside the frame carriers, within the frame opening (4), and has each of its ends supported, via a point of articulation, on a surface (5') of a supporting element (5), said surface projecting, on the underside of the frame, into the surface area defined by the frame opening (4), wherein the measuring panel (8) is supported laterally on each of the two carrying beams (6).

2. Measuring system according to Claim 1, **characterized in that** a supporting element (5) is provided at each frame corner.

3. Measuring system according to Claim 1 or Claim 2, **characterized in that** each carrying beam (6) has a length which corresponds essentially to that inner side of the frame opening (5) which is assigned to it.

4. Measuring system according to one of Claims 1 to 3, **characterized in that** each carrying beam (6) - as seen in longitudinal section - has a trapezoidal cross section.

5. Measuring system according to one of Claims 1 to 4, **characterized in that** each carrying beam (6) has a height which corresponds to the height of the frame carrier (3) located alongside it.

6. Measuring system according to one of Claims 1 to 5, **characterized in that** each carrying beam (6) has at least two supporting bodies (7) on its upper side.

7. Measuring system according to one of Claims 1 to 6, **characterized in that** the supporting elements (5) are formed by cuboidal steel plates.

8. Measuring system according to one of Claims 1 to 7, **characterized in that** the substructure (1) comprises a steel frame (2).

9. Measuring system according to one of Claims 1 to 8, **characterized in that** the carrying body (9) is produced from mineral-composite material and the substructure (1) is cast into it.

10. Measuring system according to one of Claims 6 to 9, **characterized in that** the supporting bodies (7) of the two carrying beams (6) are cast into a mineral-composite panel.

11. Measuring system according to Claim 9 or Claim 10, **characterized in that** the mineral-composite material is polymer concrete.

12. Measuring system according to one of Claims 1 to 11, **characterized in that** it is a coordinate-measuring system.

13. Measuring system according to one of Claims 1 to 12, **characterized in that** each point of articulation is formed by one or more rolling-contact bodies (14) which are provided one beside the other between the relevant end region of the carrying beam (6) and the surface (5') of the supporting element (5), said surface supporting said carrying beam.

14. Measuring system according to Claim 13, **characterized in that** the rolling-contact bodies (14) are cylindrical or spherical steel bodies.

15. Measuring system according to one of Claims 1 to 12, **characterized in that** the point of articulation is formed by a convex elevation, which is formed on the surface of the relevant supporting element (5) and via which the end region of the relevant carrying beam (6) is supported on the supporting element (5).

16. Measuring system according to one of Claims 1 to 12, **characterized in that** the point of articulation is formed by an elastic connecting layer (18), via which the end region of the relevant carrying beam (6) is fastened on the supporting element (5).

17. Measuring system according to one of Claims 1 to 12, **characterized in that** the point of articulation comprises a pivot pin, which is fitted on the supporting element (5) or on the end region of the carrying beam (6) and on which the respectively other one of the two parts is articulated in a pivotable manner.

18. Measuring system according to one of Claims 1 to 12, **characterized in that** the point of articulation is formed by a local reduction (15) in cross section at the end region of the carrying beam (6).

19. Measuring system according to Claim 18, **characterized in that** the reduction (15) in cross section is designed in the form of a groove.

20. Measuring system according to one of Claims 1 to 12, **characterized in that** the carrying beam (6) is fastened on the supporting element (5) via a connecting element (16), wherein the connecting element (16), for its part, forms a point of articulation (17).

21. Measuring system according to Claim 20, **characterized in that** the point of articulation (17) is formed by a reduction (15) in cross section on the connecting element (16).

## Revendications

1. Appareil de mesure avec un corps de support (9), sur lequel sont installés des guides (10, 11) pour des dispositifs de mesure (12, 13) déplaçables et réglables, avec un châssis de base (1), qui supporte le corps de support (9) et qui maintient un cadre (2) formé de poutres de cadre (3), qui délimite une ouverture de cadre (4) essentiellement rectangulaire et qui est fixé sur des éléments de soutien (5) pour l'appui sur une fondation, et avec une table de mesure (8) destinée à recevoir une pièce à mesurer, **caractérisé en ce qu'**en présence de deux poutres de cadre (3) disposées l'une en face de l'autre une poutre de support (6) est chaque fois disposée à côté de celles-ci à l'intérieur de l'ouverture de cadre (4), et cette poutre s'appuie avec chacune de ses extrémités au moyen d'un point d'articulation sur une surface (5') d'un élément de soutien (5) qui fait saillie sur le côté inférieur du cadre dans la région de surface formée par l'ouverture de cadre (4), dans lequel la table de mesure (8) s'appuie latéralement sur chacune des deux poutres de support (6).

2. Appareil de mesure selon la revendication 1, **caractérisé en ce qu'**il est prévu un élément de soutien (5) à chaque coin du cadre.

3. Appareil de mesure selon la revendication 1 ou la revendication 2, **caractérisé en ce que** chaque poutre de support (6) présente une longueur correspondant essentiellement au côté intérieur de l'ouverture de cadre (4) qui lui est associé.

4. Appareil de mesure selon l'une quelconque des revendications 1 à 3, **caractérisé en ce que** chaque poutre de support (6) - vue en coupe longitudinale - présente une section transversale trapézoïdale.

5. Appareil de mesure selon l'une quelconque des revendications 1 à 4, **caractérisé en ce que** chaque poutre de support (6) présente une hauteur, qui correspond à la hauteur de la poutre de cadre (3) placée à côté d'elle.

6. Appareil de mesure selon l'une quelconque des revendications 1 à 5, **caractérisé en ce que** chaque poutre de support (6) présente au moins deux corps de soutien (7) sur son côté supérieur.

7. Appareil de mesure selon l'une quelconque des revendications 1 à 6, **caractérisé en ce que** les éléments de soutien (5) sont formés par des plaques d'acier parallélépipédiques.

8. Appareil de mesure selon l'une quelconque des revendications 1 à 7, **caractérisé en ce que** le châssis de base (1) est constitué par un cadre en acier (2).

9. Appareil de mesure selon l'une quelconque des revendications 1 à 8, **caractérisé en ce que** le corps de support (9) est fabriqué en fonte minérale et le châssis de base (1) est coulé dans celui-ci.

10. Appareil de mesure selon l'une quelconque des revendications 6 à 9, **caractérisé en ce que** les corps de soutien (7) des deux poutres de support (6) sont coulés dans une plaque de fonte minérale.

11. Appareil de mesure selon la revendication 9 ou la revendication 10, **caractérisé en ce que** la fonte minérale est un béton de polymère.

12. Appareil de mesure selon l'une quelconque des revendications 1 à 11, **caractérisé en ce qu'**il est un appareil de mesure de coordonnées.

13. Appareil de mesure selon l'une quelconque des revendications 1 à 12, **caractérisé en ce que** chaque point d'articulation est formé par un ou plusieurs corps de roulement (14) installés l'un à côté de l'autre, installés entre la région d'extrémité concernée de la poutre de support (6) et la surface (5') de l'élément de soutien (5) qui la soutient.

14. Appareil de mesure selon la revendication 13, **caractérisé en ce que** les corps de roulement (14) sont des corps en acier cylindriques ou sphériques.

15. Appareil de mesure selon l'une quelconque des revendications 1 à 12, **caractérisé en ce que** le point d'articulation est formé par une surélévation convexe formée sur la surface de l'élément de soutien concerné (5), par laquelle la région d'extrémité de la poutre de support concernée (6) s'appuie sur l'élément de soutien (5).

16. Appareil de mesure selon l'une quelconque des revendications 1 à 12, **caractérisé en ce que** le point d'articulation est formé par une couche de liaison élastique (18), par laquelle la région d'extrémité de la poutre de support concernée (6) est fixée à l'élément de soutien (5).

17. Appareil de mesure selon l'une quelconque des revendications 1 à 12, **caractérisé en ce que** le point d'articulation comprend un axe de pivotement installé sur l'élément de soutien (5) ou sur la région d'extrémité de la poutre de support (6), sur lequel respectivement l'autre des deux pièces est articulée de façon pivotante.

18. Appareil de mesure selon l'une quelconque des revendications 1 à 12, **caractérisé en ce que** le point d'articulation est formé par une diminution locale de la section transversale (15) à la région d'extrémité de la poutre de support (6).

19. Appareil de mesure selon la revendication 18, **caractérisé en ce que** la diminution de la section transversale (15) est réalisée sous la forme d'une rainure.

20. Appareil de mesure selon l'une quelconque des revendications 1 à 12, **caractérisé en ce que** la poutre de support (6) est fixée à l'élément de soutien (5) par un élément de liaison (16), dans lequel l'élément de liaison (16) forme de son côté un point d'articulation (17).

21. Appareil de mesure selon la revendication 20, **caractérisé en ce que** le point d'articulation (17) est formé par une diminution de section transversale (15) sur l'élément de liaison (16).
